# EUROPEAN PATENT APPLICATION

(11) **EP 1 835 774 A1**
(43) Date of publication of application: **19.09.2007**
(21) Application number: 06005098.6
(22) Date of filing: 13.03.2006
(51) Int. Cl.: H04Q 7/38

(54) **Method and node for distributing information to a plurality of nodes in a communications network**

(71) Applicant: SIEMENS AKTIENGESELLSCHAFT, 80333 München (DE)
(72) Inventor: Andersen, Frank-Uwe, 10625 Berlin (DE); Caviglione, Lucia, CAP 16142 Genova (IT); Davoli, Franco, CAP 16154 Genova (IT); Hossfeld, Tobias, 97074 Wurzburg (DE)

(57) **Abstract**

A method for distributing information over a plurality of access nodes of a communications system comprising the steps of:
- each access node of said plurality of access nodes, upon receiving a measurement report generated from at least one mobile terminal present in said communications network, checking an identification reference of said measurement report;
- routing, upon said checking being completed, said measurement report over an overlay network to an access node of said plurality of access nodes, said access node being closest to said at least one mobile terminal having generated said message;
- storing said measurement report at said access node.

## Description

### Field of the invention

The invention is used in a communications network to ensure that information gathered is distributed throughout the communications network in a fast and efficient manner.

### Summary of the invention

Communications systems today, comprise of different networking and access technologies. These technologies are not fully integrated nor are they optimised to take into account other existing technologies.

In particular, for mobile communications beyond 3G (3^{rd} Generation), heterogeneous access systems are expected, including but not limited to IEEE (Institute of Electrical and Electronics Engineering) standards 802.11, 802.15, 802.16, Flash-OFDM (Flash Orthogonal Frequency Division Multiplexing),802.20, 2.5G (2.5 Generation) and 3G based wireless access systems, as well as fixed wireless access systems such as ISDN (Integrated Services Digital Network) or DSL (Digital Subscriber Line) for fixed mobile convergence.

In this access system landscape, an operator will likely have a much larger network managed overhead especially for access systems with low range resulting in a number of additional attachment points within an access system, at least in highly populated areas. The terms "attachment point", "attachment node" "access node", are equivalent and are used interchangeably in the application.

Operations such as handovers between ANs (access nodes) of different access technologies or even between the same access technology, require deep cooperation and result in an increased network management overhead. In today's monolithic technology used in access systems, for example 2.5, 3G access systems, are thoroughly planned and configured in advance, which is expensive and tedious. It is assumed that handovers within the same access technology are optimised, however the inventive technique is equally applicable in one access system. One option for optimising handover management is to exploit measurements performed by mobile stations (MSs) (henceforth also referred to as mobile devices (MDs) or user equipments (UEs)).

ANs need to have information about which other ANs they have to contact when a handover is required, irrespective of whether the handover is controlled by a central network element/device or by a MS initiating the handover. These relationships of ANs with one another can not easily be identified or planned beforehand in heterogeneous access systems. Particularly so for moving ANs or ANs that are frequently reconfigured.

This complex emerging networking scenario poses several challenges. The expenditures for managing and configuring such a complex system are significant. Moreover, today's users ask for sophisticated services and at the same time seek for the concept of "anytime-anywhere" and particularly in a transparent, seamless way. Hence, a heterogeneous beyond 3G communications network must be able to detect faults and reconfigure itself with low effort and with affordable technologies. Moreover, the increase in the number of MSs present creates new issues, for example in providing and maintaining the availability of several services in the same area. In such a case, new management or configuration systems need to be designed and integrated which can handle such dynamics, thus increasing the complexity and cost of such networks.

In traditional network management for communication networks and in particular mobile networks, all nodes have to be entered into a highly hierarchic and centralised network management system (NMS). An element manager (EM) in the NMS configures the individual ANs and periodically polls them for status information. Via the communication path between the EM and each AN, the EM manages the ANs, i.e. the network knows about the operating state, load, the static configuration, the location, the name assigned, the ID (identity), the network address such as an IP (internet protocol) address for each AN. The EM also holds information regarding which surrounding or neighbouring cells each AN maintains a handover relationship with. Identifying the involved neighbourhood cells is a task which is not automated today. It requires input from mobile network planning and extensive measurements.

Additionally, as all ANs communicate with the EM an increase in the signalling will occur, reducing the capacity of the communications system to transmit other data. The efficiency of the whole communications system is thus reduced.

Furthermore, it is a necessary requirement for the EM to have adequate storage resources, for example a database, capable to maintain all the different configurations and/or polling information received and adequate processing capacities to retrieve and analyse all stored information. As the number of ANs increases within a communications network, so will the amount of stored information increase, requiring a large investment in hardware storage facilities, as well as processing power in order to be able to generate information and manage a number of ANs.

Additionally, as the different transmitted messages have to travel through the communications system, the time required to gather all of them at them EM greatly reduces the possibility of a fast update from the EM to ANs. The fact that a large number of hops are required for messages to reach a destination further reduces system efficiency.

Furthermore, the EM being centrally located constitutes a SPF (Single Point of Failure) and so redundancy is required in order to ensure that in case of a failure the mechanism will still function. This redundancy also increases the amount of hardware investment required. Moreover, as there will exist at least two such entities, one being active and the other one in standby mode, synchronisation of the stored data such as configurations, polling information, must be performed regularly, further increasing signalling, processing requirements and time delays.

This solution is also not adaptable to an increase of ANs, therefore in order to compensate for an eventual increase in the number present, over-dimensioning is necessary, resulting in a waste of resources and increasing the amount of cash investment needed. Additionally, high requirements in terms of bandwidth for the synchronisation of remote ANs, for example at the outer edges of a communications system, or for simply transmitting requested information to different ANs, are also necessary in order to ensure that messages can reach these ANs.

A need therefore exists for a more flexible way in which information can be distributed and stored within a communications system in a simply and efficient manner, thus reducing the time taken for its retrieval, as well as reducing the amount of traffic generated.

A further need exists for a communications system that supports efficient handover procedures without requiring predefined information retrieved through dedicated network planning, but which can reliably and quickly react to changes in different access systems, for example because of dynamically added access nodes, failure of access nodes, moving access nodes or changes in network configurations, present in a communications system.

With the present invention, the above mentioned issues are resolved. The proposed technique allows for nodes to distribute and store information in a manner that is efficient and quick, as well as ensuring that the nodes are able to react to changes that take place in different access systems.

The technique is achieved by the teachings contained in the independent method and access node claims.

Said method distributing information over a plurality of access nodes of a communications system comprises the steps of:
- each access node of said plurality of access nodes, upon receiving a measurement report generated from at least one mobile terminal present in said communications system, checking an identification reference of said measurement report;
- routing, upon said checking being completed, said measurement report over an overlay network to an access node of said plurality of access nodes, said access node being closest to said at least one mobile terminal having generated said message;
- storing said measurement report at said access node.

Said access node comprises means arranged to perform the method of claim 1.

The inventive technique is advantageous in that it enables information to be distributed in a fast and efficient manner through the overlay network as well as being stored in a distributed manner avoiding the necessity of having a central storage location. In this way, the issue of a SPF is overcome. Furthermore, no redundant equipment serving as backup to a central storage is necessary, thus reducing the network infrastructure costs. Due to the speed by which the information is distributed throughout the network, the information is made readily available to requestors, reducing the waiting time. The information distributed is stored at a location within the network close to where the information was generated, thus reducing the amount of traffic carrying such information being transmitted over the whole network and so increasing the efficiency of the network as well as reducing wastage of network resources. As the information is stored in near to where it was generated, upon request for it, it can be provided in a fast and efficient manner, as it is not required for the information to traverse the network from a central storage location to the requestor but from a location close by to the requestor. Thus procedures, for example handover procedures, that require information in order for an eventual execution are not delayed.

Further advantages can be seen in the dependent claims, wherein:
Preferably, the identification reference comprises of a key part and a value part, where the key part comprises an information part relating to the access technology used by the at least one mobile terminal generating the measurement report and a position part relating to a location reference point where the measurement report was taken, the value part comprising of at least one result of the measurement report, thus permitting the access node receiving the message to build an image of the quality of environment in the network based on measurements taken at different positional references.
Preferably, the access node routing the measurement report uses a routing table containing at least one access node identifier to locate in the overlay network, the access node that is closest to the at least one mobile terminal. The access node identifier comprises of at least two parts, one comprising information relating to an access technology used by the access node routing the measurement report, the other part comprising information relating to a location reference point of a number of access nodes of the plurality of access nodes being close to the access node routing the measurement report. In this way, by using the routing table the routing access node can easily and efficiently find the appropriate access node to which the measurement report needs to be sent to. By using the overlay network to route the measurement report the different access node appear as peer to peer nodes and the intervening communications system becomes transparent, allowing for a more easier management of the whole procedure of distributing the information within the communications network.
Preferably, the routing table further comprises of at least one shortcut entry, the shortcut entry relating to an access node of the plurality of access nodes being nearest to the access node routing the measurement report and using a different access technology from that used by the access node routing the measurement report, allowing the access node have a complete picture of all peer to peer nodes present and neighbouring it, including such access nodes that use a different access technology.
Preferably, the access node storing said measurement report has an identical access technology with the at least one mobile terminal generating the measurement report, thus allowing measurements relating to a particular access technology to be made available to other mobile terminals using the same access technology. By keeping the storage of measurement reports within access nodes of the same access technology, a communications system comprising of numerous access technologies, is not flooded by measurements reports being routed at the same time to access nodes with differing access technologies, and reducing its efficiency.
Preferably, the access node is one of the following: a Radio Access Controller, a Base Station Controller, a Wireless Local Area Network access point, allowing for the invention to be implemented in communications systems using different access technologies.

### Short description of the drawings

The present invention will become more apparent from description given herein below and from the accompanying drawings which are given by way of information only, and thus are not limitative of the present invention, and wherein:
Fig. 1 depicts a prior art communications system.
Fig. 2 depicts a communications system where the inventive technique is implemented.
Fig. 3 depicts
Fig. 4 depicts in block diagram form the arrangement of means required to execute the inventive technique.

### Detailed description of the invention

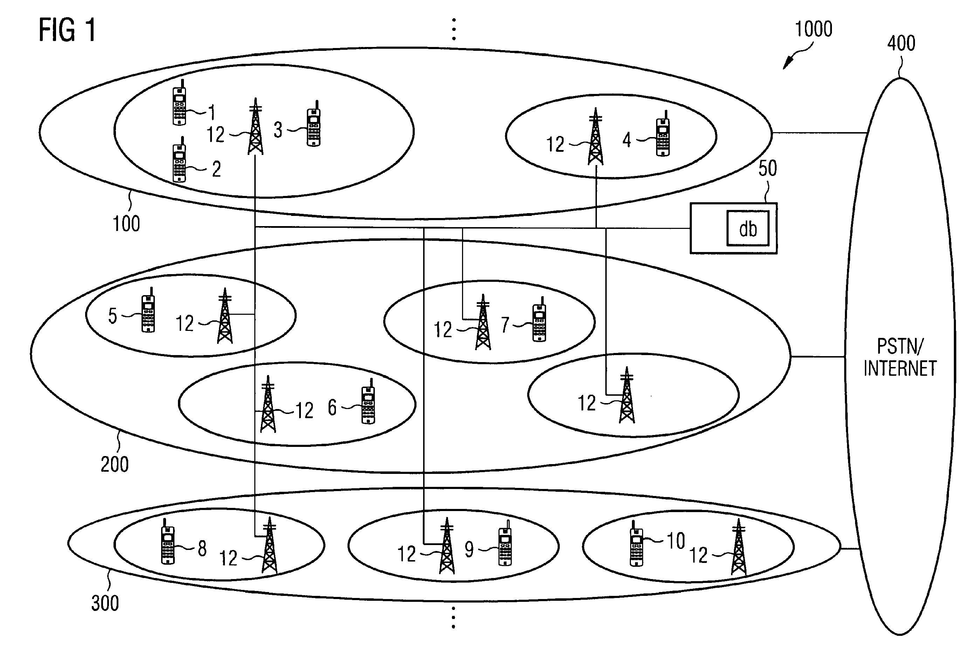

Fig. 1 depicts a communications system 1000 implementing the current state of the art solution for changing the access technology. The communications system 1000 comprises of a plurality of systems 100, 200, 300. For reasons of ease of understanding only three such systems 100, 200, 300 are depicted.

Each one of these systems 100, 200, 300 comprises of a particular access technology used within each system respectively. For example system 100 uses GSM access technologies, system 200 UMTS access technologies, system 300 WLAN access technologies.

Each system 100, 200, 300 is in turn coupled to a further system 400, which is a PSTN (public switched telephone network) and/or the internet. Systems 100, 200, 300 comprise of the required devices and or mechanisms arranged for effectuating a connection with system 400. However, it is apparent to anyone skilled in the art that communications system 1000 can comprise of more systems, as is apparent that in order to perform a change of access technology, at least two systems are required.

Each one of systems 100, 200, 300 spans the complete communications system 1000 and/or parts of it, depending on the design of each individual system 100, 200, 300.

Within the communications system 1000 a plurality of mobile stations exist and are distributed within system 100, 200, 300. These stations are depicted with numerals 1, 2, 3, 4, 5, 6, 7, 8, 9 and 10. Naturally, a person skilled in the art would know that more or less than the depicted mobile stations can exist.

Each system 100, 200, 300 is respectively further subdivided into smaller coverage areas. These coverage areas are also known in the art as cells. Each coverage area is under the control of an access point (referred henceforth also as access node) 12. Preferably, these access nodes 12, depending on the type of access technology used can be a BSC (base station controller) when a GSM access technology is used, a RNC (radio network controller) when a UMTS access technology is used or a WLAN AN (wireless local area network access node) when the access technology used is that of a wireless LAN. Each access node 12 further comprises of the required means necessary for the connection of the coverage area which it controls and by extension of the systems 100, 200, 300 to system 400.

These means are not depicted in fig.1 for reasons of simplicity, but for example they can comprise of MSCs (Mobile Switching Centres) responsible for the switching functions necessary for interconnections between a system using GSM technology and system 400, BTSs (Base Transceiver Stations) for allowing the connection between a mobile station and a BSC or other equivalent means used in other access technologies.

When a mobile station 2 wishes to perform an operation such as a handover within its own system 100 and therefore to change its point of attachment, it will request, via a transmitted request message, for information pertaining to a handover. This request message is transmitted to an entity 50 which is centrally located within communications system 1000, over communications network 1000. Entity 50 comprises of a decision mechanism and a storage means such as a data base where information pertaining to numerous types of request, one of which being a request for a handover, are stored.

The entity 50 can be for example a central NMS or a network management computer or server used to control and manage the communications network 1000. Upon receiving the request the entity 50 and in particular the decision mechanism will retrieve, using retrieving means, the information stored in the storage means, analyse the information, generate a reply and transmit the reply back to mobile station 2. The reply comprises of the necessary information needed by mobile station 2, to decide whether a request for the handover is to be performed or not.

Upon reception of the reply, mobile station 2 can then determine whether or not a handover to another access point is possible and whether it is worthwhile performing the handover. This change of attachment point is also known as a HHO (horizontal handover).

Furthermore, it is sometimes also required for a mobile station 2 to move from one system 100 using one access technology to another system 200 using a different access technology.

This can be due to the operator wishing to perform load balancing between the two systems, in order to achieve better efficiency and better quality of service or due to the fact that mobile station 2 wishes to receive a service or subscribe to a service which is not available in one access technology but is in the other, or simply because one access technology provides a better connection and a better or higher data rate than the existing one.

As in the previous scenario, a request is transmitted from mobile station 2 to entity 50 over communications network 1000 and in turn entity 50 will provide a reply. Mobile station 2 can then request the change of access technology or not, depending on the information provided. A change of access point during a handover entailing a change of access technology is known as a VHO (vertical handover).

As indicated above, in both cases of handover, all the signalling carrying the requests and the replies has to travel throughout the communications system 1000. This causes an increase in the amount of signalling that is transmitted over the network in real time.

Furthermore, in order to provide replies the central entity 50 has to gather the required information and store it, in order to be able to, upon request provide a reply. The information gathered consists of measurements taken by mobiles stations periodically or after being instructed to do so for example by an NMS.

Each mobiles station takes at least one measurement indicating the quality of the link between itself and its serving access node. It will then generate a measurement report which is forwarded via its serving access node to the central entity 50. As explained above, all the signalling carrying the measurement reports has to travel throughout the communications system 1000 to central entity 50. This causes an increase in the amount of signalling that is transmitted over the network in real time and increases the load on central entity 50.

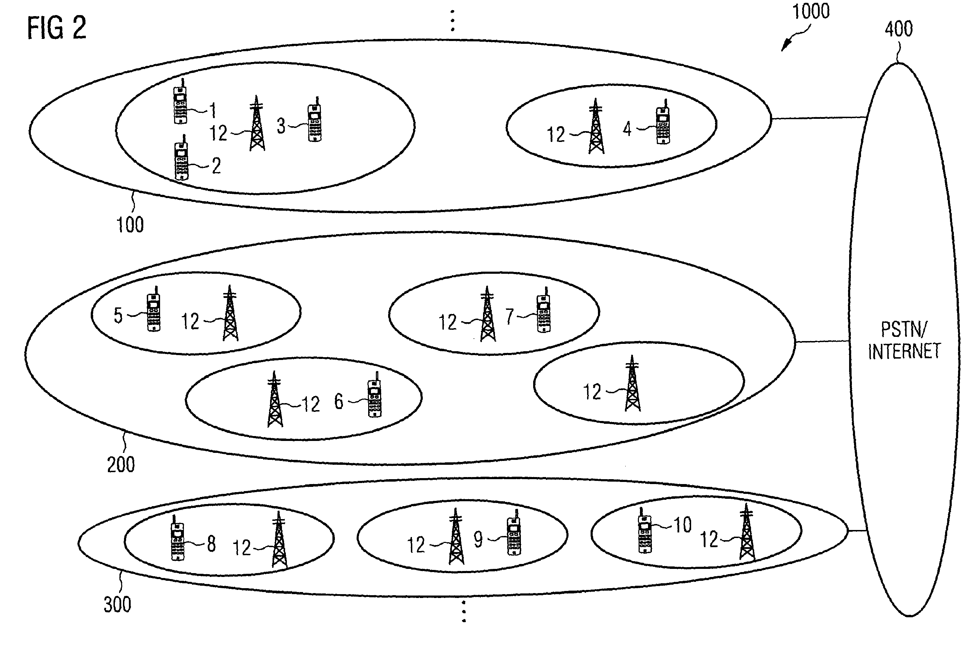

Fig. 2 shows a communications system 1000 wherein the inventive technique is implemented.

The communications system 1000 comprises of a plurality of systems 100, 200, 300. For reasons of ease of understanding only three such systems 100, 200, 300 are depicted.

Each one of these systems 100, 200, 300 comprises of a particular access technology used within each system respectively. For example system 100 uses GSM access technologies, system 200 UMTS access technologies, system 300 WLAN access technologies.

Each system 100, 200, 300 is in turn coupled to a further system 400, which is a PSTN (public switched telephone network) and/or the internet. Systems 100, 200, 300 comprise of the required devices and or mechanisms arranged for effectuating a connection with system 400. However, it is apparent to anyone skilled in the art that communications system 1000 can comprise of more systems, as is apparent that in order to perform a change of access technology, at least two systems are required.

Each one of systems 100, 200, 300 spans the complete communications system 1000 and/or parts of it, depending on the design of each individual system 100, 200, 300.

Within the communications system 1000 a plurality of mobile stations exist and are distributed within system 100, 200, 300. These stations are depicted with numerals 1, 2, 3, 4, 5, 6, 7, 8, 9 and 10. Naturally, a person skilled in the art would know that more or less than the depicted mobile stations can exist.

Each system 100, 200, 300 is respectively further subdivided into smaller coverage areas. These coverage areas are also known in the art as cells. Each coverage area is under the control of an access point (referred henceforth also as access node) 12. Preferably, these access nodes 12, depending on the type of access technology used can be a BSC (base station controller) when a GSM access technology is used, a RNC (radio network controller) when a UMTS access technology is used or a WLAN AN (wireless local area network access node) when the access technology used is that of a wireless LAN. Each access node 12 further comprises of the required means necessary for the connection of the coverage area which it controls and by extension of the systems 100, 200, 300 to system 400.

These means are not depicted in fig.2 for reasons of simplicity, but for example they can comprise of MSCs (Mobile Switching Centres) responsible for the switching functions necessary for interconnections between a system using GSM technology and system 400, BTSs (Base Transceiver Stations) for allowing the connection between a mobile station and a BSC or other equivalent means used in other access technologies.

A mobile station 2, upon performing a measurement will generate a measurement report. The measurement report comprises of an identification reference which in turn comprises of two parts, a key part and a value part. The key part further comprises of an information part and a position part.

The identification reference is used for purposes of recognition of the measurement report, routing and later on for storing each measurement report.
The information part comprises of information relating to the access technology used by the mobile station 2 when taking the measurement and the position part comprises information relating to a location reference point where the measurement report was taken.

The location reference point comprises of a 2-coordinate position reference in a format (x, y) or a 3-coordinate position reference in a format (x, y, z). Where x corresponds to a latitude reference of the position of the mobile station, y to a longitude reference of the position of the mobile station and z to the height at which the mobile station is. This position reference can be found by the mobile station using GPS (Global Positioning System), a-GPS (assisted-Global Positioning System) or cell information or using a combination of them. Each mobile station 1, 2, 3, 4, 5, 6, 7, 8, 9, 10 has the necessary means arranged to derive their position using anyone or a combination of the above positioning methods.

For reasons of ease of understanding of the inventive technique it is assumed that the location reference point where the measurement is taken is identical with the location reference point where the measurement report is generated. It is possible in an alternative refinement of the inventive technique in order to have a higher degree of positional accuracy to distinguish between them.

The value part comprises of at least one result of the generated measurement report. It is obvious to a person skilled in the art that a mobile station can take a number of measurements and generate a measurement report comprising a number of values. In our example the primary measurement used to generate measurement reports is the RSSI (received signal strength indication), and therefore no further information is necessary to be included in the value part, as the receiver is aware of the measurement taken. However, in a further refinement of the inventive technique, if more than one measurements are taken, the value part further comprises an indication relating each result to a particular measurement, so that upon reception of the measurement report, sorting of the different values is possible.

Upon taking the measurement and generating the measurement report, mobile station 2 will transmit the measurement report in a message to its serving access node 12. The serving access node 12 upon receiving the message will check the identification reference to verify that it is an identification reference for a measurement report. It will use the information comprised in the position part of the key part to check the position of the mobile station 2 and compare the position at which the measurement report was generated by mobile station 2 with entries in a routing table that serving access node 12 has. It must be noted, that all access nodes within communications system 1000 have routing tables.

Each access node 12 upon being commissioned into communications system 1000 irrespective of the particular system 100, 200, 300 that it is part of, or in the event of it recovering from a system outage or failure is setup to join an overlay network. The overlay network is a logical network formed by all access nodes present in communications system 1000 and spans the communications system 1000. In this overlay network all access nodes act as peer to peer nodes simplifying the exchange of information between them as the intervening communications infrastructure between the access nodes becomes transparent.

In order to join the overlay network, each access node 12 needs a node identifier (ID) in order for it to be identifiable within the overlay network. The ID can be acquired either by requesting for an ID from a pre-programmed address corresponding to a central node (not shown) in the communications system 1000 that receives such requests, generates an ID and then transmits it back to the requesting access node, or by an access node generating its own random ID, if no such address is pre-programmed based on its own address for example its own IP (internet protocol) or MAC (Media Access Control) address, or by using its position reference and type of access technology used, to generate the ID. In such a case the node receiving the request for an ID, will return a message to the access node indicating that it has to generate its own ID.

As mentioned, the node is centrally located in order to deal with ID requests for the whole of communications system 1000, however in an alternative example, each particular system 100, 200, 300 has its own independent node for generating a reply to such requests in order to keep signalling traffic within the boundaries of their respective systems 100, 200, 300. In yet another example, it is possible for each independent node from each system 100, 200, 300 to communicate to a central node in order for management and configuration issues to be logged centrally.

In the case of our example it is assumed that each access node generates its own ID using its position reference and type of access technology used, after receiving a message telling it to generate its own ID.

The position reference comprises of a 2-coordinate position reference in a format (x, y) or a 3-coordinate position reference in a format (x, y, z). Where x corresponds to a latitude reference of the position of the access node, y to a longitude reference of the position of the access node and z to the height at which the access node is. This position reference can be found by the access node using GPS (Global Positioning System), a-GPS (assisted-Global Positioning System), cell information or a combination of the above

Additionally, upon receiving a reply concerning an ID, an access node will also receive the address of another access node, for example access node 15, present in the overlay network to which access node 12 can set up a communication. The address is access node's 15 ID, allowing access node 12 to set up a direct communication over the overlay network.

Once access node 15 has received the message, it will then use the ID identifying access node 12 within the overlay network to set up a connection with access node 12. Naturally, upon reception of the message access node 15 will save the information relating to access node 12, as access node 12 does. This information can be saved in, for example, a routing table that contains all neighbour relationships or in a database. The information stored comprises of the positional reference of the access node and the access technology used by it. Thus by generating an ID comprising of this information which upon receipt is read and stored removes the need for transmitting separate messages for each piece of information. Furthermore the ID is stored for the duration of time that the access node is part of the overlay network. This is possible through the use of control signalling that are transmitted between the two access nodes 12, 15. As long as control signalling is received indicating that the access node is active, the receiving access node maintains the ID. In case of a departure from the overlay network, the access node departing transmits a message indicating its departure so that the partner access node can delete the corresponding ID and the partner relationships set up. In the case of failure, a lack of reception of a control signal from an access node within a predetermined time period will trigger an access node to delete the corresponding ID any partner relationships already set up.

In this way, access nodes can quickly become aware of the presence of neighbouring access nodes, as information is quickly received by access nodes. Instead of the information being forwarded to a central device e.g. a NMS (Network Management System) device, which in turn then broadcasts the information onto communications system 1000, entailing a longer period of time and numerous hops for the information to reach access nodes. After acquiring an ID and setting up a communications link, routing tables and or other information can be exchanged a lot faster between two neighbouring access nodes. Thus greatly reducing the time and the number of hops required for the propagation of the information. Furthermore, in this way, connections can then be set up quickly and handover partnerships created between access nodes.

In a further refinement of the mechanism of the overlay network, once access node 15 has received the information of the presence of access node 12 and has set up a connection via the overlay network, it can on its own accord then forward the information relating to access node 12 to other access nodes which neighbour it and with which partner relationships have already been set-up.
An access node such as 14, which is a neighbour of access node 15 and has an existing partner relationship with access node 15, can upon receiving a message from access node 15 relating to newly joined access node 12, in turn save it and update its own routing table for example and using the ID set-up a connection via the overlay network to access node 12.

As mentioned previously, upon receiving the measurement report, access node 12 checks the position of the mobile station 2 and compares the position at which the measurement report was generated by mobile station 2 with entries in its routing table that it has acquired via the overlay network mentioned above. These entries as explained, comprise of the information comprising the IDs of the different access nodes that are part of the overlay, and indicate a positional reference of each access node and the type of access technology of each access node. It is obvious also to a person skilled in the art, that when exchanging information access nodes can also exchange other information such as IP addresses or DNS names which are also stored in the routing tables of each access node.

Upon comparing the positional reference of the measurement report with those of the different access nodes stored in its routing table, the serving access node 12 will forward the measurement report to an access node that is located the closest to the position where the measurement report was generated. Determining the closest access node to the position where a measurement report was generated, can be done using numerous mathematical methods such as triangulation for example.

In most cases the serving access node will be the closest access node to position where the measurement report was generated, as it is the serving access node to the mobile station generating the report. Therefore it will route the measurement report directly for storage within its own storage means.

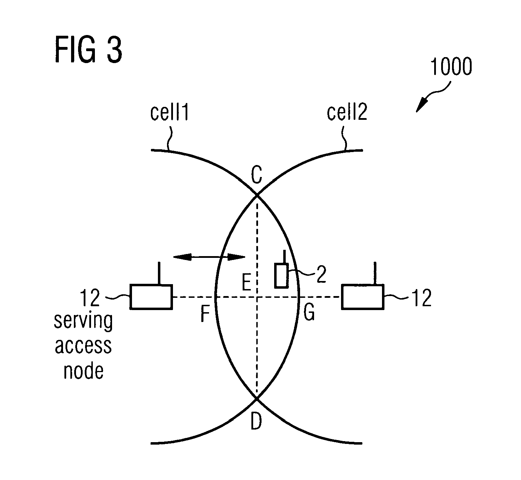

However it is also possible that a mobile station 2 be located at the moment of generating a measurement report, within an area of overlap between the coverage areas of the serving access node 12 and that of a neighbouring access node using the same access technology as depicted in fig. 3.

In such a case, the serving access node 12 will determine that the closest access node is the neighbouring one. Therefore, the measurement report and the information contained therein, would be more useful for the neighbouring access node than to the serving access node 12. In this case, the serving access node will route the measurement report using the ID of the neighbouring access node over the overlay network to the neighbouring access node.

In particular, in a further refinement of the inventive technique, the serving access node 12 can depending on where within the overlap the measurement report was generated do one of the following:
1) If the location of the measurement report lies within the area C-E-D-G-C, the measurement report is routed to the neighbouring access node.
2) If the location of the measurement report lies within the area C-E-D-F-C, the measurement report is routed to the storage means of the serving access node 12.
3) If the location of the measurement report lies along the line C-E-D, the serving access node 12 can route the measurement report to the neighbouring access node and/or store it in its storage means.
   The decision to route and/or store the measurement report can depend on other factors taken into account when this case occurs, such as statistics maintained by the serving access node 12 on the number of times that a measurement report has originated from such a location, the number of times a measurement report has been routed from the serving access node 12 to the particular access node, the number of time that a handover has been performed between the serving access node and the particular access node etc. Measurement reports are stored by an access node for a period of time and then deleted or when a new measurement report is received from a location within a specified range from a previous stored measurement report, the newer report overwrites the older one. In case of a lack of regularly received measurement reports, an access node can store all received reports irrespective of the location where they were generated from.

In the above example, the inventive technique has been shown in a situation where a measurement report is generated by a mobile station and stored at its serving access node or at a neighbouring access node of the same access technology. However it is also possible in communications system 1000 which comprises of numerous systems 100, 200, 300 using different access technologies that upon comparing the positional reference of the measurement report with those of the different access nodes stored in its routing table, it can derive that an access node of a different access technology is in fact located closer to the position where the measurement report was generated.

While it is possible for the serving access node to route the measurement report to such an access node over the overlay network using the inventive technique, in our example this is not done for the simple reason that in such a case a large investment in storage means and processing power would be required for each access node irrespective of the access technology used by each access node to store and process all measurement reports received. If an access node requires information such as measurement reports gathered by another access node using a different access technology, it can easily and simply transmit a request over the overlay network to the access node in question.

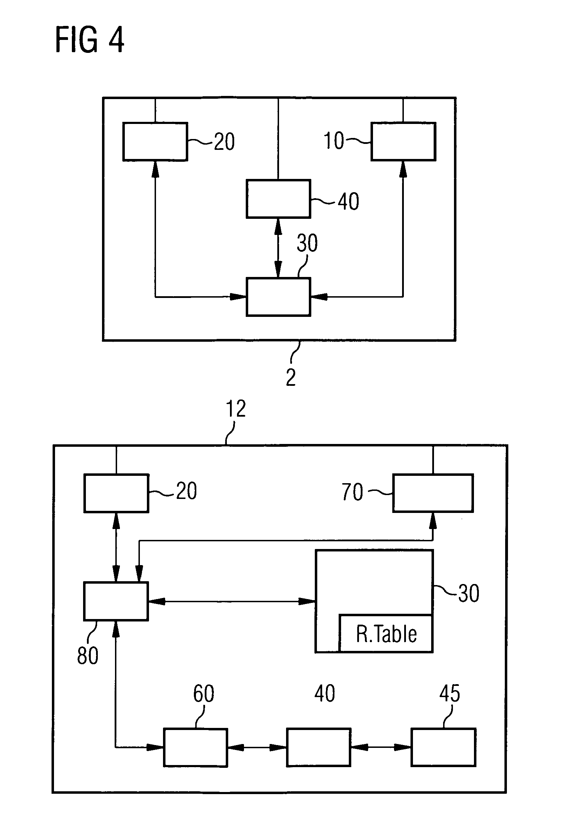

Fig. 4, depicts the arrangement of means required to execute the inventive technique. Mobile station 2 comprises of location means 10 adapted to determine a location reference of the location where a measurement report is generated. The location reference comprises of a 2-coordinate position reference in a format (x, y) or a 3-coordinate position reference in a format (x, y, z). Where x corresponds to a latitude reference of the position of the mobile station, y to a longitude reference of the position of the mobile station and z to the height at which the mobile station is. This location means 10 use GPS (Global Positioning System), a-GPS (assisted-Global Positioning System) or cell information or a combination of them.
It further comprises of receive/transmit means 20 arranged to receive and transmit messages to and from mobile station 2. Measurement means 40, arranged to take the required measurements. All means 10, 20, 40 are coupled to control means 30 arranged to generate the measurement report and control the mobile station 2.

Access node 12 comprises of transmit/receive means 20 which are adapted to receive and transmit messages to and from access node 12. Furthermore, access node 12 comprises of routing means 30 which further comprise of a routing table. The routing table comprises of information necessary for an access node 12 to route a message received or to provide the correct destination of a message to be transmitted from the access node 12 over the overlay network. The format of the routing table comprises of an entry indicating the access technology associated to a particular access node, of an entry indicating the position of the closest access nodes in the neighbourhood of the access node 12. The routing means 30 are also adapted to ascertain which nodes are neighbouring nodes as well as which node is the closest one to the mobile station having generated the measurement report. The entry indicating the position of the closest nodes comprises of a 2-coordinate position reference in a format (x, y) or a 3-coordinate position reference in a format (x, y, z). Where x corresponds to a latitude reference of the position of the access node, y to a longitude reference of the position of the access node and z to the height of at which the access node is. Location means 70 use GPS (Global Positioning System), a-GPS (assisted-Global Positioning System) or cell information or a combination of them to determine the access node's position.

Naturally, it is obvious to a person skilled in the art that further entries can be placed in the routing table in order to allow a node to route a message. Such a further entry could be an IP (internet protocol) address of an access node 12, if such addresses are in use or a DNS name.

Access node 12 further comprises of storing/retrieving means 40 which are arranged to store and retrieve measurement reports or other data from a storage location 45. Preferably, the storage location is a data base. However, other means of storage such as flash RAM (random access memory), CD-ROM (compact disc- read only memory), floppy disc are also possible. The storing/retrieving means 40 are coupled to generating means 60 which are also coupled to the routing means 30.

The generating means 60 having received the retrieved information from the storing/retrieving means 40 analyse it and then generate a reply comprising of the required information necessary for a handover decision to be made when requested by a mobile station 2. All means in access node 12 are under the control of control means 80.

As mentioned previously, a mobile station 2 can perform certain measurements which then are used to generated measurement reports which are then transmitted to the serving access node 12. The measurements taken are quality measurements. These measurements contain information that is used in handover procedures, particularly in deciding when to request a handover, be it a HHO or a VHO.

In particular to choose the most suitable radio access technology a fundamental aspect is to assess the quality that different radio access technologies provide to the different mobile stations. This quality verification is basically obtained from measurements on the current and target systems. These measurements are included in the transmitted measurements reports that are sent periodically or at specific instances by the mobile stations to the nodes.

Measurement reports depending on the access technology used and/or served to a mobile station at a particular moment in time can also be the following:
A mobile station 2 in a GSM type access technology will perform the following measurements and generate corresponding measurement reports which are transmitted to its serving access node 12 of the cell within which the mobile station is located. In this case the node 12 is a BTS and the measurement reports are stored in a BSC (base station controller).
These measurements are:
   RXLEV (received signal level) of the serving cell,
   RXQUAL (received signal quality) of the serving cell evaluated through the BER (bit error rate), and RXLEVNCELL (received signal strength of the neighbouring cells).

These measurements are reported on the SACCH (slow associated control channel) channel periodically every 480 milliseconds. The serving access node 12 can measure the performance of uplink channel for each mobile station being served by it, within its cell (coverage area) and also the interference level on its idle traffic channels and report these measurements as well to the BSC. Moreover, mobile stations within a GSM access technology can also perform measurements to generate measurement reports on UMTS cells.

The information gathered about UMTS cells are:
CPICH RSCP (common pilot channel received signal code power), PCCPCH RSCP (primary common control channel received signal code power) for cells using TDD (time division duplexing) and
CPICH E_{c}/Iₒ (common pilot channel current serving cell quality indicator) for cells using FDD (frequency division duplexing). These measurements can also be used in the cell re-selection and handover procedures.

For access technologies using GPRS (General Packet Radio Service) access technologies, the same measurements are used except that the mobile station 2 is in packet mode and can measure the interference signal level on the same carrier as the assigned packet data channels in packet transfer mode and on the monitored packet common control channel in packet idle mode.

For access systems using UMTS access technologies, the measurements performed by the mobile stations and transmitted in measurement reports are sent to their serving access node 12. In this case the access node 12 is a RNC. In this access technology the measurements can be reported periodically or are event triggered. The mobile station 12 can perform several measurements which are:
Intra-frequency measurements such as CPICH E_{c}/Iₒ, CPICH RSCP and path loss.
   Inter-frequency measurements such as CPICH E_{c}/Nₒ (common pilot channel ratio of desired receive power per chip to receive power density in the band), CPICH RSCP.
   Inter-radio access technology (inter-RAT) measurements such as GSM carrier RSSI (received signal strength indication). Mobile station internal measurements such as UTRA (UMTS Terrestrial Radio Access) carrier RSSI, mobile station transmitted power, mobile station receive to transmit time difference.
Quality measurements such as BER (bit error rate), BLER (transport channel block error rate).
   Synchronisation measurements and/or traffic measurements such as total buffer occupancy of RLC (radio link control) buffer, average of buffer occupancy, variance of buffer occupancy. All measurements are performed by the physical layer except for traffic measurements which are performed at the MAC layer.
For mobile stations functioning in a WLAN (wireless LAN) access technology using such protocols as the IEEE 802.11 and 802.11K the only measurement taken is the RSSI measurement. This measurement is useful for changing access point in case of mobility.
The different measurement types mentioned above, can be included directly into one measurement report or each measurement is included in an own measurement report and transmitted from mobile station 2 to its serving node 12.
Other measurement types can be the received signal strength indication, the received channel power indicator indicating a measure of the absolute received power of an 802.11 signal, the channel load, a noise histogram reporting containing the RPI identities in each of the eight power ranges defined by the measured RCPI in the specified channel over a specified measurement duration when CCA (Clear Channel Assessment) indicates idle, the beacon report containing the RCPI that is the received channel power of the beacon of proved response frame in dBms, the frame report containing the RCPI, i.e. the received power of the received frame, the hidden node report containing the MAC address of the station being reported and the medium sensing time histogram report providing information describing many characteristics of the current radio activities present in the measured channel.
Other measurements that can be performed by mobile stations and transmitted in a measurement report for storage are certain indicators which are used generally to monitor the system performance. Such indicators are the dropped call rate, the blocked call rate, the handover failure rate, etc. In one example of the invention the primary measurement used is the RSSI, however a mobile station can generate a report with more than one measurement and use in alternative examples, any of the above or a combination of them.
All measurement reports transmitted from a mobile station comprise of at least one measurement from the above-mentioned measurements possible, the measurement report also comprises of an entry indicating the access technology used by the mobile station 2 at the time of making the measurement as well as a position reference entry indicating at which location the measurement(s) was/were taken. This positional reference is known by the mobile station 2 via GPS, a-GPS, cell information or a combination of them.
An access node on receiving a measurement report will store in the appropriate storage location an entry comprising of; a position reference, an access technology reference, and at least one measurement that refer to the received measurement report.
Although the invention has been described in terms of a preferred embodiment described herein, those skilled in the art will appreciate other embodiments and modifications which can be made without departing from the scope of the teachings of the invention. All such modifications are intended to be included within the scope of the claims appended hereto.

## Claims

1. Method for distributing information over a plurality of access nodes of a communications system comprising the steps of:
- each access node of said plurality of access nodes, upon receiving a measurement report generated from at least one mobile terminal present in said communications network, checking an identification reference of said measurement report;
- routing, upon said checking being completed, said measurement report over an overlay network to an access node of said plurality of access nodes, said access node being closest to said at least one mobile terminal having generated said message;
- storing said measurement report at said access node.

2. Method according to claim 1, wherein said identification reference comprises of a key part and a value part.

3. Method according to claim 2, wherein said key part comprises an information part relating to an access technology used by said at least one mobile terminal generating said measurement report and a position part relating to a location reference point where said measurement report was taken, said value part comprising of at least one result of said measurement report.

4. Method according to claim 1, wherein said access node routing said measurement report uses a routing table to locate in said overlay network, said access node being closest to said at least one mobile terminal.

5. Method according to claim 4, wherein said routing table comprises of at least one access node identifier.

6. Method according to claim 5, wherein said at least one access node identifier comprises of at least two parts.

7. Method according to claim 6, wherein said first part comprises information relating to an access technology used by said access node routing said measurement report and said second part comprises information relating to a location reference point of a number of access nodes of said plurality of access nodes being close to said access node routing said measurement report.

8. Method according to claim 5, wherein said routing table further comprises of at least one shortcut entry, said shortcut entry relating to an access node of said plurality of access nodes being nearest to said access node routing said measurement report and using a different access technology from that used by said access node routing said measurement report.

9. Method according to claim 1, wherein said access node storing said measurement report has an identical access technology with said at least one mobile terminal generating said measurement report.

10. Access node comprising means arranged to perform the method of claims 1 to 9.

11. Access node according to claim 10, wherein said access node is one of the following: a Radio Access Controller, a Base Station Controller, a Wireless Local Area Network access point.

12. Communications system comprising at least one access node according to claims 10 to 11.
